Europäisches Patentamt

European Patent Office

Office européen des brevets

(11) Publication number : **0 479 556 A1**

(12) **EUROPEAN PATENT APPLICATION**

(21) Application number : **91308989.2**

(22) Date of filing : **01.10.91**

(51) Int. Cl.⁵ : **G11B 33/04**

(30) Priority : **02.10.90 GB 9021387**

(43) Date of publication of application :
**08.04.92 Bulletin 92/15**

(84) Designated Contracting States :
**AT BE CH DE DK ES FR GB GR IT LI LU NL SE**

(71) Applicant : **POSITIVE INVENTION LTD**
**The Water Tower, Bradford Court, Bradford Street**
**Birmingham B12 ONS (GB)**

(72) Inventor : **Price, George Victor**
**391 Lichfield Road, Mere Green, Four Oaks**
**Sutton Coldfield, B74 4DH, West Midlands (GB)**
Inventor : **Howard, Peter James**
**Yately Avenue, Great Barr**
**Birmingham, West Midlands B42 1JN (GB)**

(74) Representative : **Hands, Horace Geoffrey et al**
**GEORGE FUERY & CO Whitehall Chambers 23 Colmore Row**
**Birmingham B3 2BL (GB)**

(54) **Storage and transport means.**

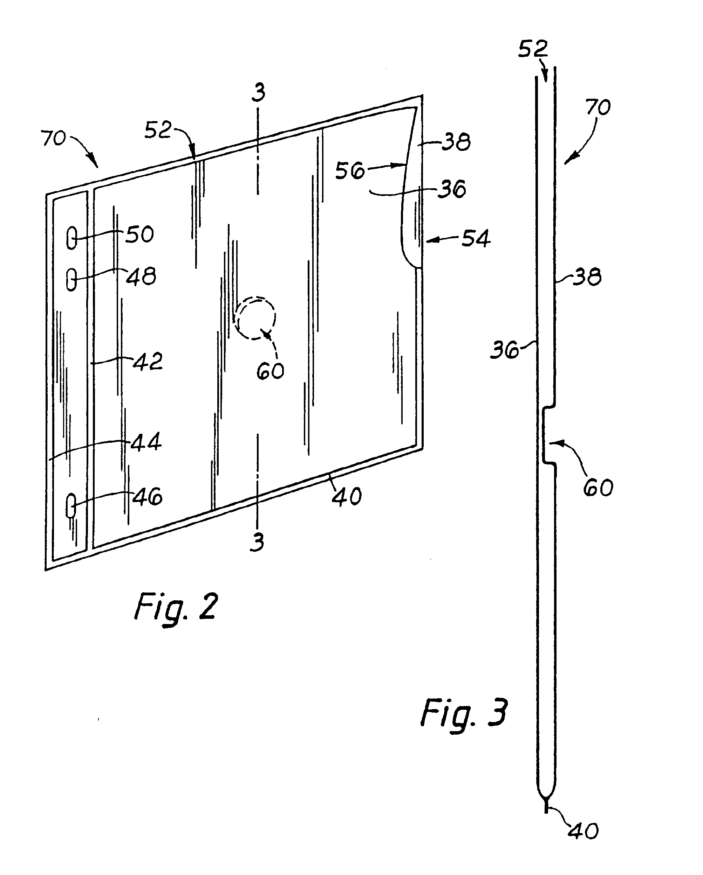

(57)    CD records are stored in individual sleeves Fig. 2 with a central boss 60 to centre the disc in the sleeve, and irregularly pitched holes 46-50 to be threaded by binder pins or snap rings in the loose leaf type binder which holds a plurality of sleeves and discs. This gives protection to the discs, security against loss and particularly compact storage for them.

Fig. 2

EP 0 479 556 A1

Fig. 4

This invention relates to storage and transport means primarily for record discs, and especially for compact discs (CDs).

The conventional storage and transport system for CDs comprises a box made of rigid plastics with a hinged lid, having a central set of projections engaged in the centre of the disc so as to locate it relative to the box. A box for a single CD is of the order of 8mm thick and one for a two-disc set is commonly about 25mm thick whereas the discs themselves are only of the order of 1 or 2mm thick. If the user wishes to take several discs to a party, or to carry a choice of discs in a motor vehicle to play on in-car equipment or to store a plurality of discs, the volume occupied by the boxes may be inconvenient particularly for jacket pocket or car door pocket accommodation. The object of the invention is to provide improved storage and transport means which may house a plurality of CDs in relatively safe condition without requiring the same volume of space.

According to one aspect of the invention, CD storage means comprises a plurality of individual CD storage sleeves retained between a pair of covers by binder means.

The individual sleeves may be envelopes made of film or sheet material which is much thinner than the discs themselves. The material may be acetate sheet or polypropylene for example, and preferably is one which is heat formable, pressable or vacuum formable. The sleeve may closely sandwich the disc. This reduces the volume required and allows a plurality of discs to be stored in the kind of space hitherto required for a single disc.

The invention further consists in the combination of at least one CD record contained in an individual sleeve in the form of an envelope comprising two layers of material, at least one of which is flexible, said sleeve having a first marginal edge portion of the two layers secured together and perforated with at least two spaced holes, said layers also being secured together along one edge extending from said marginal edge, means for retaining said CD in said sleeve, and a binder comprising a pair of protection boards sandwiching said sleeve and hingedly connected to spine member, a pair of binder pins secured to said spine member, and said pins extending through the said spaced holes, means for releasing the sleeves from said pins and means for fastening the binder boards together to enclose the sleeves.

Preferably the binder means or pins comprises at least a pair of split rings threaded through apertures in the margins of the sleeves and fixed to the covers, which retain the sleeves in the covers but being capable of being opened and the sleeves displaced like the leaves of a book. The rings may be spring loaded or lever moved in any suitable fashion to enable them to be opened so that additional sleeves can be inserted or removed.

Preferably three rings are provided, at unequal pitch, that is the centre one is asymmetrically located with the respect to the other two.

Preferably the covers are boards for example of fibre board which may be substantially square and of dimensions slightly in excess of the disc diameter. The sleeves may be of similar dimension and may be acetate or polypropylene for example, sheet material welded along two or possible three sides so as to enable the discs to be inserted and removed.

A separate spine member may be attached to the rings to give added protection, and/or to allow the spine to be attached to a corresponding spine portion of the binder.

An assembly according to the invention will accommodate a plurality, for example of the order of 7 or 10 CDs according to spine width between board covers and occupy no more space than a conventional two disc box.

One presently preferred embodiment of the present invention is more particularly described with reference to the accompanying drawing wherein:-

Figure 1 is a perspective view of a CD binder in use, and in a closed position;

Figure 2 is a perspective view of an individual sleeve used in said binder;

Figure 3 is a section on the line 3-3 of Figure 2; and

Figure 4 is a perspective view of the binder in an open position receptive to sleeves.

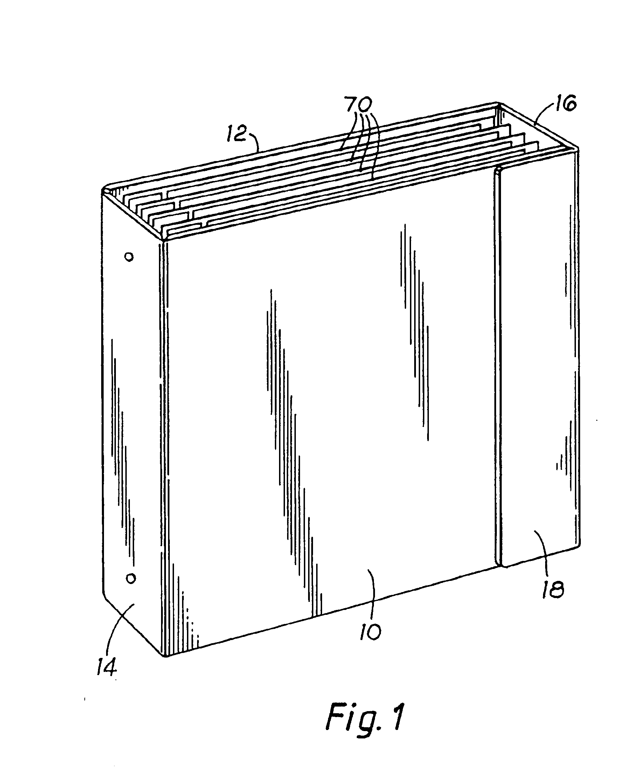

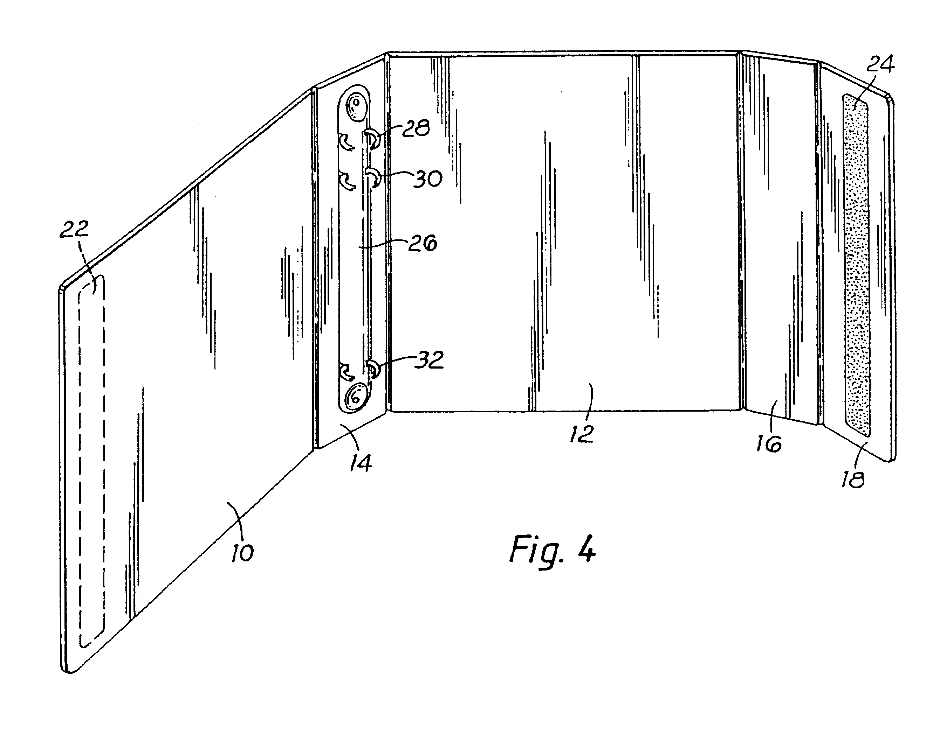

Turning first to Figures 1 and 4 the binder comprises front and back boards 10, 12 hingedly connected to a spine 14 and to a closure flap 16 with a latching, flap 18. The outside board 10 and the inside of the flange 18 carry adherable components such as male and female Velcro (RTM) pads 22, 24 or may be provided with any other latchning system such as a mechanical spring loaded catch or a magnetic catch.

In the preferred embodiment the parts 10, 18 are fibre-board panels encased in plastic sheet, welded around the edges, and between the individual panels to form hinges.

A metal spine 26 mounts three split rings 28, 30, 32 of the kind which can be opened to a "C" shape and snapped closed to an "O" shape. Or if preferred binder pins or posts may be attached to for example the board 10 with a keeper bar to retain to retain individual sleeves on the pins or posts.

The individual sleeves ref 70, Figures 2 and 3 are preferably composed of two rectangular leaves 36, 38 of preferably clear (transparent, so as to enable the disc to be identified without removal) material forming an envelope. The leaves may be welded together along the bottom edge 40 and along parallel lines at right angles thereto, 42, 44 and perforated at 46, 48, 50 between those lines. The leaves may also be welded together along the top edge 52 and open wholly along the free end edge 54. Hence the leaves are separable along edges 54.

One of the leaves, called the front leaf 36 may be cut away along edge 56 near one corner at the junction of edges 52, 54 to facilitate manual separation of the leaves. The other leaf 38 (the rear leaf) is moulded with a central hollow boss 60 dimensioned to be a pressfit in the central aperture in the record. Those leaves may be made for example as vacuum forming and the naturally occurring space between the leaves as seen in Figure 3 is similar in dimension to the standard CD disc that is about one mm. When a disc is inserted and located, the hollow box can be snap-engaged with the disc for security of location. Similarly for release, the box can be snap-released.

The spacing of the rings 28-32 or equivalents, and that of the perforations 46-50 is of course the same and the asymmetry will be noted. It establishes a top 52, and bottom 40 so that all of the sleeves, when a plurality is assembled into the rings, are the same way up.

The use of the latching flap or equivalent on the binder ensures security against loss of discs by falling out, especially when sufficient thickness of sleeves is assembled into the binder. However, the security may also depend upon the stiffness or rigidity of the sheet material used for the envelopes or sleeves. If particularly flexible material is used, it may be preferred to weld the edge 54 along part or whole of the its length instead of leaving it open as in the illustrated embodiment.

**Claims**

1. CD storage means comprising a plurality of individual CD storage sleeves retained between a pair of covers by binder means.

2. Storage means as claimed in Claim 1 wherein the binder comprises at least two split rings, pins or binder posts threaded through apertures in the margin of the sleeves.

3. Storage means as claimed in Claim 2 wherein three rings or equivalents are provided at irregular pitch so that the binder in each sleeve has a top and bottom.

4. Storage means as claimed in Claim 2 or Claim 3 wherein each sleeve comprises a pair of leaves secured together along an edge and apertured adjacent said edge for the rings, and also secured together along an edge extending from said edge.

5. Storage means as claimed in Claim 4 wherein one leaf has a moulded boss arranged to be received in the central aperture of a record when located in said sleeve.

6. Storage means as claimed in Claim 5 wherein the two leaves of each sleeve are of similar but not identical shape and dimensions.

7. Storage means as claimed in any of Claims 2-6 wherein the rings are attached to a spine reinforcement of the binder.

8. Storage means as claimed in any preceding claim wherein the binder comprises said pair of covers arranged to sandwich the said sleeves therebetween, a spine hingely connected to both covers at one adjacent edge of each, a closure flap hinged to one of the covers at the opposite adjacent edge, and latching means for holding the binder closed.

9. Storage means substantially as described with reference to the accompanying drawings.

10. In combination, at least one CD record contained in an individual sleeve in the form of an envelope comprising two layers of material, at least one of which is flexible, said sleeve having a first marginal edge portion of the two layers secured together and perforated with at least two spaced holes, said layers also being secured together along one edge extending from said marginal edge, means for retaining said CD in said sleeve, and a binder comprising a pair of protection boards sandwiching said sleeve and hingedly connected to spine member, a pair of binder pins secured to said spine member, and said pins extending through the said space holes, means for releasing the sleeves from said pins and means for fastening the binder boards together to enclose the sleeves.

Fig. 1

*Fig. 2*

*Fig. 3*

Fig. 4

EP 0 479 556 A1

**European Patent Office**

# EUROPEAN SEARCH REPORT

Application Number

EP    91 30 8989

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-8 910 882 (R.O.YOUNGS) | 1,2,4,9, 10 | G11B33/04 |
| A | | 3,5,6,8 | |
| | * page 16, line 18 - page 19, line 24 * <br> * abstract; figures * <br> --- | | |
| X | EP-A-0 022 652 (VICTOR COMPANY OF JAPAN LTD.) | 1,9,10 | |
| A | | 2,4,5,8 | |
| | * page 16, line 3 - page 18, line 11 * <br> * abstract; figures * <br> --- | | |
| X | DE-U-8 908 146 (HERBERT RICHTER) | 1,2 | |
| A | | 5,8-10 | |
| | * page 1 - page 4; figures * <br> --- | | |
| A | DE-A-3 641 724 (K.-H.VENDEL) | 1,2,4, 8-10 | |
| | * column 2, line 45 - column 4, line 36; figures * <br> --- | | |
| A | DE-A-3 512 823 (G.PFEIFFER) <br> * page 4 - page 5; figures * <br> --- | 1,2,5,9 | TECHNICAL FIELDS SEARCHED (Int. Cl.5) |
| A | PATENT ABSTRACTS OF JAPAN <br> vol. 4, no. 90 (P-17)(572) 27 June 1980 <br> & JP-A-55 052 562 ( TAEKO MUKAEMACHI ) 17 April 1980 <br> * abstract * <br> --- | 1,2,4, 7-10 | G11B <br> B65D <br> B42F |
| A | US-A-4 730 727 (J.PETROFF) <br> * column 7, line 56 - column 9, line 57; figures * <br> --- | 1,8-10 | |
| A | BE-A-481 055 (H.HUBERTI) | 1,2,4,9, 10 | |
| | * claims 1,5-7; figures * <br> ----- | | |

The present search report has been drawn up for all claims

| Place of search | Date of completion of the search | Examiner |
|---|---|---|
| THE HAGUE | 05 DECEMBER 1991 | DECLAT M.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

8